# EUROPÄISCHE PATENTSCHRIFT

(11) **EP 1 685 755 B1**
(45) Veröffentlichungstag und Bekanntmachung des Hinweises auf die Patenterteilung: **04.03.2015**
(21) Anmeldenummer: 06001485.9
(22) Anmeldetag: 25.01.2006
(51) Int. Cl.: A01D 41/14, A01B 73/04

(54) **Selbstfahrende landwirtschaftliche Erntemaschine**
Self-propelled harvester
Dispositif de recolte automoteur

(30) Priorität: 27.01.2005 DE 102005006216
(43) Veröffentlichungstag der Anmeldung: 02.08.2006
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE); Overmeyer, Bernward, Dipl.-Ing., 49497 Mettingen (DE); Ester, Markus, Dipl.-Ing., 48480 Lünne (DE)

(56) Entgegenhaltungen:
- EP-A- 0 553 506
- DE-A1- 19 933 779
- DE-A1-102004 022 534
- US-A1- 2004 123 575

## Beschreibung

Die Erfindung bezieht sich auf eine selbstfahrende landwirtschaftliche Erntemaschine nach dem Oberbegriff des Anspruchs 1, welche ein Erntegerät umfasst, dass insbesondere durch seine Gestaltung und Flexibilität die Leistungsfähigkeit der Erntemaschine erheblich steigert. Erntemaschinen der zuvor genannten Art gibt es in zahlreichen Ausführungsformen, vorzugsweise handelt es sich hierbei um Erntemaschinen mit einem Erntevorsatzgerät zur Ernte von stängelartigen Erntegut wie Mais oder dergleichen. Leistungsfähigkeit und Schnelligkeit sind Forderungen, die es immer weiter zu verbessern gilt. Immer größere Arbeitsbreiten der Vorsatzgeräte, die durch immer größere Motorleistungen der Erntemaschinen ermöglicht werden und so die Leistungsfähigkeit der Erntemaschine steigern, erfordern jedoch immer aufwändigere Lösungen bezüglich Handhabung und Transport.

Um bei Transportfahrten von Erntemaschinen mit Erntegeräten großer Arbeitsbreite einen besonders zeitaufwändigen Abbau des Erntegerätes und ein Mitführen auf einem gesonderten Transportwagen zu vermeiden, sind bereits verschiedene Ausführungsformen von Erntegeräten bekannt, die in der Transportstellung eine Breitenreduzierung ermöglichen. Um die gesetzlichen Vorschriften für die Straßenfahrt einer Erntemaschine einzuhalten, ist jedoch nicht nur eine maximale Breite von beispielsweise 3 Meter einzuhalten, sondern ebenso eine höchstzulässige Transporthöhe und eine maximal zulässige Einschränkung des Sichtfeldes des Fahrers, sowie eine maximale Achslast.

In der DE 199 33 779 A1 des Anmelders ist beispielsweise eine Erntemaschine mit einem mittig geteilten Erntegerät offenbart, bei dem die beiden Hälften aus einer zum Erdboden parallelen Arbeitsstellung in eine senkrechte Transportstellung verschwenkt werden können. Durch eine besonders vorteilhafte Lage der Schwenkachsen und Gestaltung der Aufhängungen der Erntegeräthälften ist mit einfachen Mitteln ein Erntegerät geschaffen worden, welches unter Beachtung der vorhergehend genannten gesetzlichen Bestimmungen eine große Arbeitsbreite bei geringem Gewicht und konstruktiven Aufwand bietet. Der Forderung nach noch größeren Arbeitsbreiten ist bei dieser Ausführungsform jedoch durch die gesetzlich zulässige Transporthöhe eine Grenze gesetzt. Des Weiteren ist die Sichtbehinderung durch die in der Transportstellung senkrecht gestellten Erntegeräthälften durch die geschickte Anordnung der Schwenkachsen zwar auf ein Minimum reduziert, aber nicht ganz zu vermeiden.

Aus der US 2004/0123575 A1 ist ein Erntevorsatzgerät für einen Mähdrescher offenbart, welches aus einem fest mit dem Mähdrescher verbundenen Mittelteil und zwei schwenkbeweglich daran angelenkten Seitenteilen besteht. In der Arbeitsstellung nehmen die Seitenteile eine sich an die Ausdehnung des Mittelteiles anschliessende, etwa parallel zum Erdboden ausgerichtete Lage ein, aus der sie für den Transport auf der Straße durch eine Schwenkbewegung um eine in Fahrtrichtung gerichtete Achse in eine Transportstellung überführt werden können, in der die Seitenteile mit ihrer Oberseite nebeneinander auf der Oberseite des Mittelteiles aufliegen. Daraus ergibt sich, dass die Arbeitsbreite der Seitenteile maximal der Hälfte der Arbeitsbreite des Mittelteiles entsprechen kann. Weiterhin sind sowohl den Seitenteilen als dem Mittelteil reihenabhängig Teilerspitzen mit dazugehörigen Fördereinrichtungen zugeordnet, welche nur eine Förderung des Erntegutes in eine der Fahrtrichtung entgegen gerichtete Richtung zulassen. Mit diesem Erntevorsatzgerät ist also überhaupt keine quer zur Fahrtrichtung gerichtete, reihenunabhängige und einem zentralen Einzug zufließende Förderung erreichbar.

Weitere bekannte Lösungen, bei denen die Erntegeräte der Erntemaschinen mehrteilig ausgeführt sind und um mehr als zwei Achsen geklappt und/oder geschwenkt werden, ermöglichen eventuell eine größere Arbeitsbreite, verursachen aber allesamt eine Sichtbehinderung des Fahrers der Erntemaschine. Besonders nachteilig ist bei diesen Lösungen aber auch der hohe konstruktive Aufwand und das damit verbundene hohe Gewicht, die erschwerte Handhabung, die negative Beeinflussung des Erntemaschinenschwerpunktes und nicht zuletzt die hohen Herstellkosten.

Der Erfindung liegt daher die Aufgabe zugrunde, eine gattungsgemäße selbstfahrende landwirtschaftliche Erntemaschine derart zu verbessern, dass bei Transportfahrten mit angebautem Erntegerät, welches eine Arbeitsbreite von zumindest annähernd der dreifachen Transportbreite hat und dabei besonders leicht und einfach im Aufbau ist, bei Einhaltung aller gesetzlichen Bestimmungen, insbesondere bezüglich der Transportabmessungen das Sichtfeldes des Fahrers nicht durch das Erntegerät eingeschränkt wird.

Erfindungsgemäß wird diese Aufgabe durch die im Patentanspruch 1 genannten Merkmale gelöst.

Gemäß der Erfindung ergibt sich eine selbstfahrende landwirtschaftliche Erntemaschine mit einem im Frontbereich in Fahrt- und/oder Arbeitsrichtung vor einem Fahrerstand angeordneten, zumindest aus einem Mittelteil und Seitenteilen gebildeten und in seiner längsten Ausrichtung quer zur Fahrt- und Arbeitsrichtung ausgerichteten Erntegerät, welches so gestaltet ist, dass durch eine annähernd 180 Grad Schwenkbewegung von mindestens zwei Seitenteilen des Erntegerätes um in zumindest annähernd in Fahrt- und Arbeitsrichtung liegenden Schwenkachsen diese Seitenteile derart aus einer quer zur Fahrt- und Arbeitsrichtung sich erstreckenden Betriebsstellung in eine Transportstellung überführbar sind, dass die für die Straßenfahrt der Erntemaschine gesetzlich zulässigen Abmessungen, insbesondere bezüglich Transportbreite eingehalten werden und die zumindest zwei schwenkbeweglichen Seitenteile, deren quer zur Fahrt- und Arbeitsrichtung gerichtete Längserstreckung jeweils zumindest annähernd der maximal zulässigen Transportbreite entspricht, durch Einhaltung eines Folgeablaufes bei der Verschwenkung nach dem Verschwenken übereinander auf dem Mittelteil mit ihrer Unterseite jeweils nach oben zeigend abgelegt sind, wobei jedem Teil des Erntegerätes zumindest ein Mäh- und/oder Fördermittel zugeordnet ist und diese als Endlosförderer das Erntegut einem Einzugsbereich der Erntemaschine zuführen, wobei die Mäh- und Fördermittel der Seitenteile während der Arbeitsfahrt der Erntemaschine ein Abtrennen, Aufnehmen und Weiterbefördern des gesamten, erfassbaren Erntegutes an der in Fahrtrichtung weisenden Vorderseite zum Mittelteil hin bewirken.

Bei bisher bekannten Erntemaschinen mit einem zumindest dreiteiligen Erntegerät, wobei an einem Mittelteil, welches annähernd die Transportbreite hat und jeweils außen ein Seitenteil verschwenkbar angebracht ist, liegen die Seitenteile nach ihrer Verschwenkung um 180 Grad nebeneinander auf dem Mittelteil. Das bedeutet, dass die Seitenteile maximal eine Breite haben können, die der Hälfte des Mittelteiles entspricht.

Bei der Ausführung nach der Erfindung können die Seitenteile jedoch eine Breite haben, die annähernd der Breite des Mittelteiles und damit der Transportbreite entspricht. Das bedeutet, dass die Gesamtarbeitsbreite annähernd dem dreifachen der Transportbreite entspricht. Ermöglicht wird die breite Ausführung der Seitenteile des Erntegerätes einer Erntemaschine nach der Erfindung dadurch, dass durch die geschickte höhenversetzte Anordnung der Schwenkachsen der Seitenteile und durch die Einhaltung eines Folgeablaufes bei der Verschwenkung der Seitenteile diese nach dem Verschwenken übereinander auf dem Mittelteil mit ihrer Unterseite jeweils nach oben zeigend zumindest annähernd parallel zueinander abgelegt sind.

So ergibt sich in der Transportstellung eines Erntegerätes ein dreifach geschichtetes Paket aus Erntegerätteilen, welches quer zur Fahrtrichtung der Erntemaschine maximal die zulässige Transportbreite einnimmt.

Um dieses Paket in der Höhe möglichst kompakt zu halten, liegen die Schwenkachsen der Seitenteile erfindungsgemäß nicht genau parallel zu einer gedachten vertikalen Mittelebene der Erntemaschine. Durch eine leichte Schrägstellung der Schwenkachsen verschwenken die Seitenteile derart, dass vorstehende Bauteile der Erntegerätteile beim Verschwenken nicht mit anderen Bauteilen kollidieren und in der endgültigen Transportstellung in vorhandene Freiräume eingreifen. In einer Ansicht von oben auf das in Transportstellung befindliche Erntegerät bedeutet das, dass die Längsmittellinien der verschwenkten Erntegerätteile nicht parallel mit der quer zur Fahrtrichtung verlaufenden Längsmittellinie des Mittelteiles des Erntegerätes verlaufen. Ein derart in Transportstellung verbrachtes Erntegerät ist in der Bauhöhe so kompakt, dass das Sichtfeld des Fahrers der Erntemaschine durch das Erntegerät nicht eingeschränkt wird. Dies kommt nicht nur der Übersicht und dem Fahrkomfort sondern insbesondere der Verkehrssicherheit zugute.

Ein weiterer, insbesondere für die Verbesserung der Verkehrssicherheit großer Vorteil der Erfindung liegt in den kompakten Abmessungen und dem niedrigen Gewicht des Erntegerätes. Diese Merkmale verbessern das Fahrverhalten durch den niedrigen Schwerpunkt und einen kurzen Abstand zur Vorderachse der Erntemaschine besonders bei schneller Straßenfahrt erheblich.

In weiteren Ausführungsformen ist auch ein Erntegerät mit mehr als drei Teilen denkbar, welches nach dem Verschwenken in die Transportstellung unter Verwendung der erfindungsgemäßen Merkmale ein Paket mit vier oder mehr Schichten von Erntegerätabschnitten bildet. Durch die erfindungsgemäße Gestaltung des Erntegerätes und insbesondere durch die erfinderische Anordnung der Schwenkachsen der Seitenteile ist es möglich, die Erntemaschine durch das Verschwenken eines oder beider Seitenteile des Erntegerätes in eine senkrechte Außerbetriebstellung mit unterschiedlichen Arbeitsbreiten zu betreiben, ohne das Erntegerät zu wechseln. Diese verschiedenen Betriebstellungen eröffnen dem Maschinenbediener ganz neue Arbeitsweisen. So ist es beispielsweise möglich, nur mit dem mittleren Teil des Erntegerätes am Feldanfang einen Bereich abzuernten, der dann das komplette Ausklappen des Erntegerätes auf dem Feld ohne Erntegutverlust ermöglicht. Besonders bei Erntegeräten mit großer Arbeitsbreite ist ein komplettes Ausklappen außerhalb des Feldes oft nicht möglich, weshalb bislang dann Erntegutverluste durch das Hineinfahren und Ausklappen im Erntegut in Kauf genommen werden mussten.

Bei einer besonders vorteilhaften Ausgestaltung des Erntegerätes einer Erntemaschine nach der Erfindung ist die Arbeitsbreite des mittleren Erntegerätteiles bei in Außerbetriebstellung befindlichen Seitenteilen derart auf einen normierten Reihenabstand des Erntegutes abgestimmt, dass eine sichere Ernte einer Anzahl von Reihen gewährleistet ist, so das weitere Erntegutreihen weder durch Teile des Erntegerätes noch durch die Erntemaschine selbst beschädigt bzw. niedergefahren werden.
Somit ist durch die besonders vorteilhaften Merkmale der Erfindung eine Erntemaschine geschaffen, welche ein sehr flexibel einsetzbares Erntegerät mit einer vergrößerten Arbeitsbreite umfasst, das in der Transportstellung keine Sichtbeeinträchtigung des Fahrers darstellt und die Verkehrssicherheit bei der Transportfahrt wesentlich erhöht.

Weitere Merkmale und Vorteile der Erfindung ergeben sich aus den Ansprüchen und der nachstehenden Beschreibung in Verbindung mit der Zeichnung, in der ein Ausführungsbeispiel des Gegenstands der Erfindung veranschaulicht ist.
In der Zeichnung zeigt:
**Fig. 1** eine perspektivische Darstellung einer erfindungsgemäßen selbstfahrenden landwirtschaftlichen Erntemaschine mit einem in drei Teile aufgeteilten Erntegerät zum Ernten von Mais oder dergl. stängelartigem Erntegut in einer Arbeits- und Betriebsstellung;
**Fig. 2** eine perspektivische Darstellung der Erntemaschine nach Fig. 1 mit in Transportstellung überführten Teilen des Erntegerätes;
**Fig. 3** eine Detaildarstellung des Bereiches X der Fig. 1.

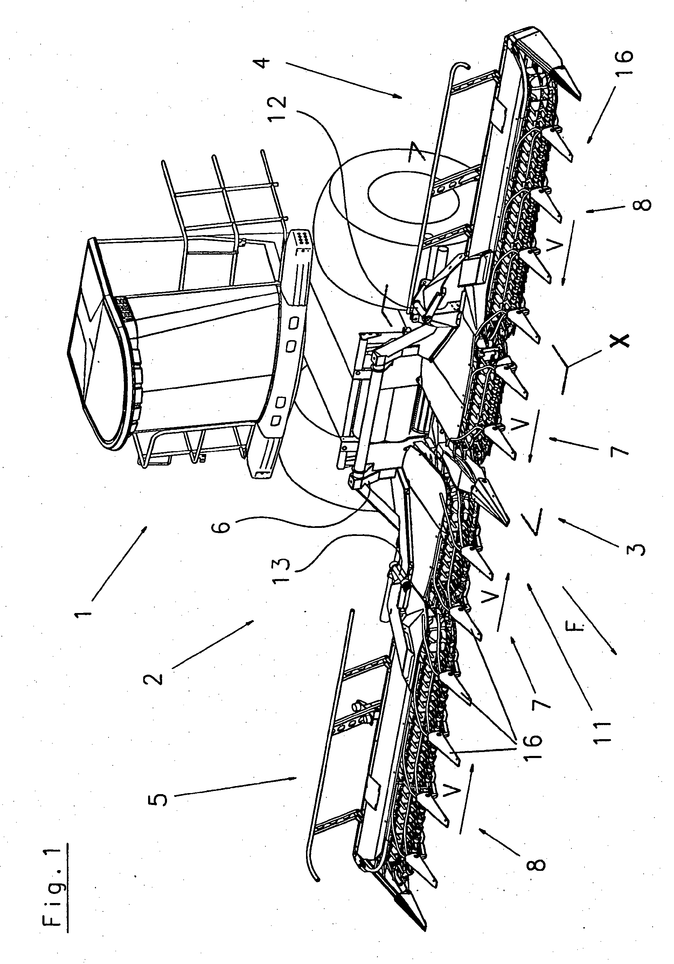

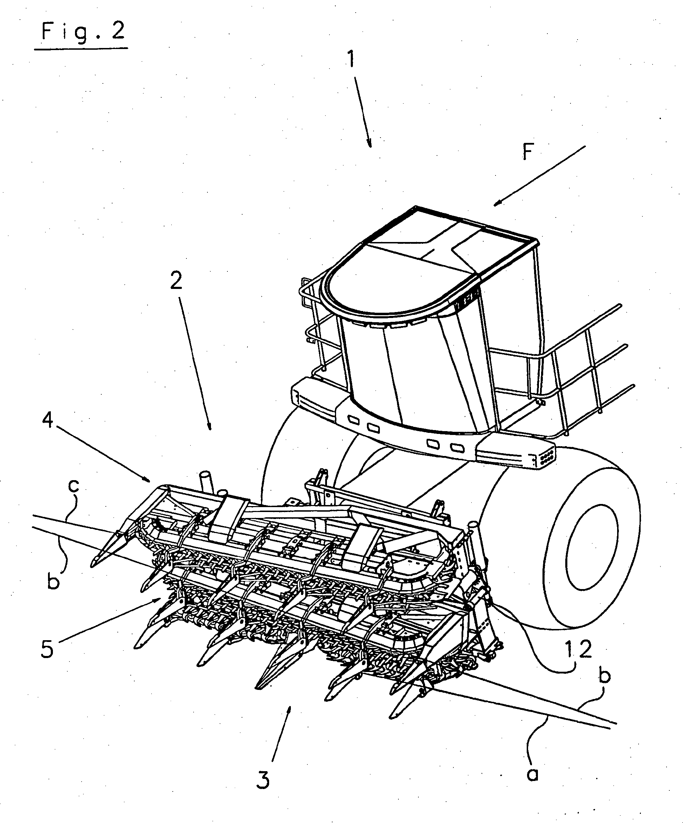

Ein Beispiel einer selbstfahrenden landwirtschaftlichen Erntemaschine 1 in der Ausführungsform eines Feldhäckslers mit einem Erntegerät 2, das insbesondere als Vorsatzgerät zum reihenunabhängigen Ernten von stängelartigem Erntegut wie Mais oder dergleichen eingesetzt wird, ist in Fig. 1 näher veranschaulicht und besteht vorzugsweise, wie hier dargestellt, aus drei Teilen 3, 4, 5. Einem über einen Grundrahmen 6 fest mit der Erntemaschine verbundenen Mittelteil 3 sind dabei zwei randseitig an diesem über je eine Schwenkachse 12, 13 angelenkte Seitenteile 4, 5 zugeordnet. In der in Fig. 1 dargestellten Arbeitsstellung des Erntegerätes 2 sind die Seitenteile 4, 5 in nicht näher beschriebener Weise seitlich am Mittelteil 3 abgestützt und erforderlichenfalls verriegelt.
Das Mittelteil 3, sowie die Seitenteile 4, 5 umfassen jeweils Mäh- und Fördermittel 7, 8, welche umlaufend angetrieben das Erntegut mit nach außen weisenden Schneid- und Halteelementen 9, 10 abtrennen, aufnehmen und weiterfördern.
Der Antrieb der Mäh- und Fördermittel 7, 8 erfolgt in nicht dargestellter Weise über Antriebsstränge von einer Kraftquelle der angeschlossenen Erntemaschine 1 aus. Beim Verschwenken der Seitenteile 4, 5 in eine Außerbetriebsstellung werden die Antriebsstränge der Seitenteile 4, 5 getrennt und umgekehrt beim Verschwenken der Seitenteile 4, 5 in ihre Arbeits- und Betriebsstellung automatisch wieder verbunden.
Im gezeigten Beispiel ist das Erntegerät 2 genau mittig zur Erntemaschine 1 vorgebaut, so dass es sich symmetrisch zu einer vertikalen Längsmittelebene der Erntemaschine 1 zu beiden Seiten hin erstreckt. Um das von den Seitenteilen 4, 5 zugeführte Erntegut dem Einzugsbereich 11 der Erntemaschine 1 gleichzeitig und gleichmäßig zuführen zu können, ist das Mittelteil des Erntegerätes 2 mit zwei Mäh- und Fördermittel 7 ausgestattet, welche gegensinnig in Pfeilrichtung V umlaufend angetrieben das Erntegut der Erntemaschine 1 zuführen.
Die Seitenteile 4, 5 des Erntegerätes 2 der erfindungsgemäßen Erntemaschine 1 des Ausführungsbeispiels sind vorteilhaft jeweils mit nur einem Mäh- und Fördermittel 8 ausgestattet, welches in Pfeilrichtung V umlaufend angetrieben während der Arbeitsfahrt der Erntemaschine das gesamte von ihm erfassbare Erntegut ausschließlich an seiner in Fahrtrichtung F weisenden Vorderseite abtrennt, aufnimmt und weiterfördert. Die Vorteile einer Ausführung der Seitenteile 4, 5 mit nur einem Mäh- und Fördermittel 8 sind das besonders geringe Gewicht, die sehr kompakte Baugröße und damit auch die günstige Schwerpunktlage und die antriebstechnisch einfache Ausführung. Besonders bei immer größeren Arbeitsbreiten der Erntegeräte sind das wichtige Kriterien, die den Herstellungspreis, die Handhabung und die Transportmöglichkeiten des Erntegerätes entscheidend beeinflussen.
Die sehr kurz bauende Ausführung eines Erntegerätes 2 des Beispiels bringt bereits in der in Fig. 1 gezeigten Arbeitsstellung Vorteile bezüglich kurzer Förderwege des Ernteguts zum Einzugsbereich 11 der Erntemaschine 1 und eine günstige Achslastverteilung der Erntemaschine. Die in der Fig. 2 dargestellte Transportstellung des Erntegerätes macht jedoch noch weitere sehr vorteilhafte Merkmale deutlich.
Aus einer Arbeitsstellung des Erntegerätes 2 gemäß Fig. 1, in der sich alle Teile 3, 4, 5 mit den ihnen zugeordneten Mäh- und Fördermitteln 7, 8 in einer zumindest annähernd gemeinsamen Ebene parallel zum Erdboden befinden, wird durch Verschwenken der Seitenteile 4, 5 um die Schwenkachsen 12, 13 mit Hilfe nicht näher beschriebener hydraulischer Arbeitszylinder die Transportstellung des Erntegerätes 2 gemäß Fig. 2 erreicht.
Die Schwenkachsen 12, 13 ermöglichen dabei durch ihre besondere unterschiedliche Ausrichtung, welche zu einer vertikalen Längsmittelebene der Erntemaschine 1 in unterschiedlich spitzen Winkeln und zusätzlich in unterschiedlichen Höhen liegt, eine sehr kompakte, optimierte Transportposition der Erntegerätteile 3, 4, 5 zueinander. Für die Verlagerung der Seitenteile 4, 5 in die Transportstellung gemäß Fig. 2 wird zunächst das Seitenteil 5 um die tiefer liegende Schwenkachse 13 um 180 Grad verschwenkt, so dass es dann mit der Unterseite nach oben zeigend auf das Mittelteil 3 abgelegt ist. Hierbei bewirkt die schräge Ausrichtung der Schwenkachse, dass das Seitenteil 5 möglichst dicht zum Mittelteil 3 beabstandet auf diesem abgelegt werden kann, ohne dabei mit anderen Bauteilen des Erntegerätes 2 zu kollidieren. Jetzt erfolgt für das zweite Seitenteil 4 ebenfalls die Verschwenkung um 180 Grad, jedoch um die wesentlich höher, aber aus gleichen Gründen auch schräg angeordnete Schwenkachse 12, wobei die hohe Anordnung der Schwenkachse 12 bewirkt, dass sich das Seitenteil 4 mit seiner Unterseite nach oben zeigend auf das bereits verschwenkte Seitenteil 5 in Transportstellung ablegt. Die aus den bereits genannten Gründen vorteilhafte, leicht versetzte Ausrichtung der Erntegerätteile 3, 4, 5 in der Transportstellung zueinander wird in Fig. 2 durch die Linien a, b und c ersichtlich, welche jeweils als Verlängerungen der Vorderlinien der Erntegerätteile 3, 4, 5 nur zur Verdeutlichung dienen.

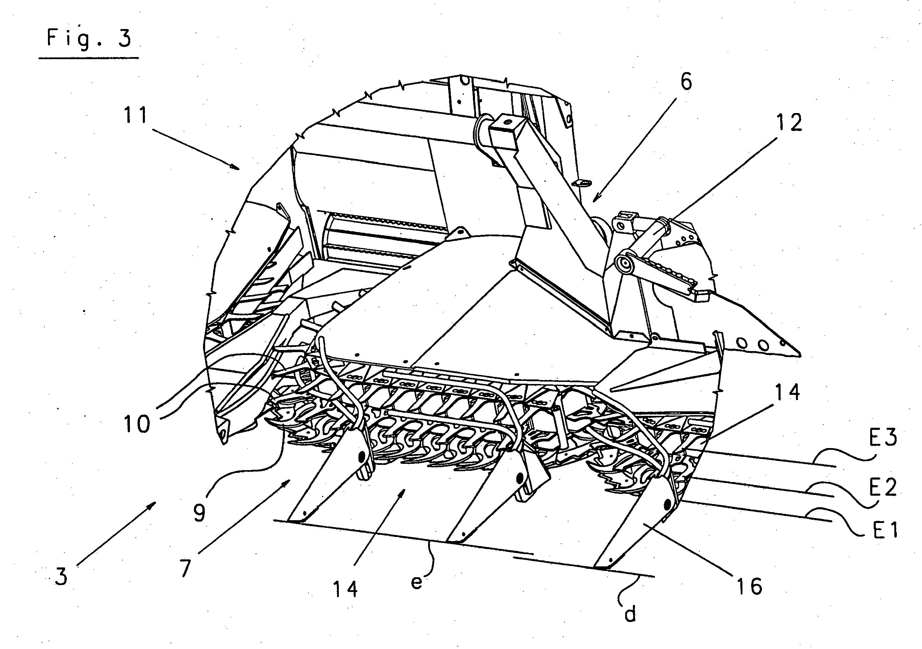

Die vorteilhafte Transportstellung des Erntegerätes 2 der erfindungsgemäßen Erntemaschine wird am in Fig. 2 dargestellten Ausführungsbeispiel besonders deutlich.
Das Erntegerät 2 mit einer Arbeitsbreite von nahezu der dreifachen Erntemaschinenbreite bildet in seiner Transportstellung eine derart kompakte Einheit, dass sie bei ihrem Verbleib vor der Erntemaschine 1 bei der Transportfahrt durch ihr geringes Gewicht und dem günstigen tief und dicht zur Erntemaschine liegenden Schwerpunkt die Fahreigenschaften nicht negativ beeinflusst und des weiteren das Sichtfeld des Fahrers nicht einschränkt und damit eine wesentliche Verbesserung der Verkehrssicherheit mit sich bringt.
Sollte ein Erntegerät 2 der beschriebenen Ausführungsform beispielsweise auf Grund seiner noch weiter gesteigerten Arbeitsbreite in der Transportstellung in seiner Querausrichtung für den Straßenverkehr zu breit sein und deshalb auf einem Transportwagen mitgeführt werden, so bietet die Ausführungsform auch dabei große Vorteile durch seine kompakten Abmessungen und niedrige Schwerpunktlage.
Die Erntemaschine 1 nach der Erfindung kann durch die vorteilhafte Gestaltung seines Erntegerätes 2 außer in den in Fig. 1 und Fig. 2 gezeigten Betriebsarten noch in weiteren vorteilhaften Betriebsarten betrieben werden.
So ist es beispielsweise möglich, ein oder beide Seitenteile 4, 5 des Erntegerätes 2 nur um etwa 90 Grad in eine zum Erdboden annähernd senkrechte Stellung zu verschwenken, um dann entweder mit kleinster Arbeitsbreite nur mit dem Mittelteil 3 oder aber mit einer mittleren Arbeitsbreite mit dem Mittelteil 3 und einem Seitenteil 4, 5 zu ernten. Da die Antriebsstränge der Seitenteile 4, 5 bei ihrem Verschwenken getrennt werden, sind die Mäh- und Fördermittel 8 in dieser zuvor beschriebenen zusätzlichen Außerbetriebsstellung stillgesetzt. Diese zusätzlichen Betriebsarten können unter anderem sehr vorteilhaft sein, wenn außerhalb des abzuerntenden Feldes nicht ausreichend Platz zur Verfügung steht, um das Erntegerät komplett in seine Arbeitsstellung gemäß Fig. 1 zu bringen. In einem solchen Fall kann mit verringerter Arbeitsbreite ein entsprechender Bereich des Feldes abgeerntet werden, ohne dabei Verluste durch Überfahren oder Abknicken des Erntegutes zu verursachen.
Die bisher im Vorhergehendem beschriebenen, vorteilhaften Merkmale des Erntegerätes 2 der erfindungsgemäßen Erntemaschine 1 des Beispiels beruhen fast ausschließlich auf dem Grundprinzip der Mäh- und Fördermittel 7, 8 und deren erfindungsgemäße Ausgestaltung und Verwendung.
So umfassen die Mäh- und Fördermittel 7, 8 in erster Linie, wie insbesondere in der Detailansicht der Fig. 3 erkennbar, gelenkig miteinander verbundene Teilsegmente 14 mit an diesen angeordneten nach außen weisenden Schneid- und Halteelementen 9, 10, welche in übereinander angeordneten Ebenen E1, E2, E3 liegen. Jedes Teilsegment 14 weist dabei in der unteren Ebene E1 je ein Schneidelement 9, in der mittleren Ebene E2 je ein Halteelement 10 und in der oberen Ebene E3 ebenfalls nur ein weiteres Halteelement 10 auf. Die gelenkig miteinander verbundenen Teilsegmente 14 der Mäh- und Fördermittel 7, 8 werden um mindestens zwei nicht dargestellte Antriebs- und Umlenkräder derart umlaufend angetrieben, dass sie das Erntegut mit ihrem in Fahrt- und Arbeitsrichtung F vorne verlaufenden Trumm abtrennen, aufnehmen und in der Art eines Endlosförderers linear in Pfeilrichtung V zur Mitte des Erntegerätes 2 fördern. Ein kritischer Punkt der Förderung ist dabei die störungs- und verlustfreie Übergabe des Erntegutes an den Schnittstellen zwischen Mittelteil 3 und Seitenteilen 4, 5. In diesen Bereichen muß das gesamte bis dahin von dem Mäh- und Fördermittel 8 aufgenommene und geförderte Erntegut an das innen liegende Mäh- und Fördermittel 7 der jeweiligen Erntegerätseite übergeben und von diesem aufgenommen werden, bei gleichzeitigem Abtrennen und Aufnehmen weiteren Ernteguts.
Ermöglicht wird diese Übergabe in erster Linie durch eine besondere Anordnung der jeweiligen benachbarten Mäh- und Fördermittel 7, 8 einer Erntegeräthälfte. Der Abstand der Linien d und e in Fig. 3, welche Parallelen zu den Erntegerätteilen 3, 4 darstellen, zeigt deutlich die versetzte Anordnung der Seitenteile 4, 5 zum Mittelteil 3. Durch die gleichzeitige, nach vorne gleich geneigte Stellung der Erntegerätteile 3, 4, 5 in der Art, dass die untere Schneidebene E1 der Mäh- und Fördermittel 7, 8 im gleichen Abstand zum Erdboden beabstandet sind und somit das Erntegut auf der gesamten Arbeitsbreite auf gleicher Höhe abschneiden, wird ein Überschneiden der Umlaufebenen E1, E2, E3 der Schneid- und Halteelemente 9, 10 kollisionsfrei ermöglicht. Diese Merkmale und die vorteilhafte Verwendung möglichst kleiner Teilsegmente 14, die wiederum Umlenkungen mit kleinen Radien der Mäh- und Fördermittel 7, 8 besonders in den Übergabebereichen ermöglichen, bewirken ein schnelles Öffnen und Schließen der Aufnahmeräume 15 zwischen den Halteelementen 10 der Mäh- und Fördermittel, was bei gleichzeitiger Überschneidung der Umlaufebenen und gleichem Drehsinn eine störungsfreie Übergabe des Erntegutes zur Folge hat.
Unterstützend sind den Mäh- und Fördermitteln 7, 8 für eine in allen Bereichen optimierte Erntegutführung Stängelteiler 16 mit an diesen angeordneten Führungsbügeln zugeordnet. Durch die Kombination der beschriebenen Merkmale des Ausführungsbeispiels wird ein ausschließlich an der Vorderseite des Erntegerätes stattfindender Ernteguttransport, auch über Schnittstellen des Erntegerätes 2 hinweg mit dort notwendiger Übergabe von einem Mäh- und
Fördermittel 8 eines Seitenteiles 4, 5 zu einem Mäh- und Fördermittel 7 des Mittelteiles 3 bei gleichzeitiger Ernte und Aufnahme weiteren Erntegutes möglich. Weitere Ausführungsformen mit beispielsweise mehr als einem klappbaren Seitenteil je Erntegeräthälfte sind dabei auch denkbar.

## Patentansprüche

1. Selbstfahrende landwirtschaftliche Erntemaschine (1) mit einem im Frontbereich in Fahrt- und/oder Arbeitsrichtung vor einem Fahrerstand angeordneten, zumindest aus einem Mittelteil (3) und Seitenteilen (4,5) gebildeten und in seiner längsten Ausrichtung quer zur Fahrt- und Arbeitsrichtung (F) ausgerichteten Erntegerät (2), welches so gestaltet ist, dass durch eine annähernd 180 Grad Schwenkbewegung von mindestens zwei Seitenteilen (4, 5) des Erntegerätes (2) um in zumindest annähernd in Fahrt- und Arbeitsrichtung (F) liegenden Schwenkachsen (12, 13) diese Seitenteile (4,5) derart aus einer quer zur Fahrt- und Arbeitsrichtung (F) sich erstreckenden Betriebsstellung in eine Transportstellung überführbar sind, dass die für die Straßenfahrt der Erntemaschine (1) gesetzlich zulässigen Abmessungen, insbesondere bezüglich Transportbreite eingehalten werden und die zumindest zwei schwenkbeweglichen Seitenteile (4, 5), deren quer zur Fahrt- und Arbeitsrichtung (F) gerichtete Längserstreckung jeweils zumindest annähernd der maximal zulässigen Transportbreite entspricht, durch Einhaltung eines Folgeablaufes bei der Verschwenkung nach dem Verschwenken übereinander auf dem Mittelteil (3) mit ihrer Unterseite jeweils nach oben zeigend abgelegt sind, wobei jedem Teil (3, 4, 5) des Erntegerätes (2) zumindest ein Mäh- und/oder Fördermittel (7, 8) zugeordnet ist und diese als Endlosförderer das Erntegut einem Einzugsbereich (11) der Erntemaschine (1) zuführen, wobei die Mäh- und Fördermittel (8) der Seitenteile (4,5) während der Arbeitsfahrt der Erntemaschine ein Abtrennen, Aufnehmen und Weiterbefördern des gesamten, erfassbaren Erntegutes an der in Fahrtrichtung (F) weisenden Vorderseite zum Mittelteil (3) hin bewirken.

2. Selbstfahrende landwirtschaftliche Erntemaschine (1) nach Anspruch 1, **dadurch gekennzeichnet, dass** das Erntegerät (2) dreigeteilt ist, wobei ein Teil (3) einen in seiner Querausrichtung mittig zu einer Vertikalmittelebene der Erntemaschine (1) angeordneten Grundrahmen (6) umfasst, dem die weiteren Teile randseitig schwenkbar angelenkt als Seitenteile (4, 5) zugeordnet sind.

3. Selbstfahrende landwirtschaftliche Erntemaschine (1) nach einem der Ansprüche 1 und 2, **dadurch gekennzeichnet, dass** durch das Verschwenken zumindest eines schwenkbaren Teiles (4, 5) des Erntegerätes (2) in eine in etwa senkrecht zum Erdboden ausgerichtete Außerbetriebsstellung weitere Betriebsstellungen des Erntegerätes (2) mit unterschiedlichen Arbeitsbreiten ermöglicht werden.

4. Selbstfahrende landwirtschaftliche Erntemaschine (1) nach einem der vorhergehenden Ansprüche, **dadurch gekennzeichnet, dass** das den Grundrahmen (6) umfassende Mittelteil (3) des Erntegerätes (2) zumindest zwei Mäh- und/oder Fördermittel (7) aufweist, welche das Erntegut erst quer zur Fahrt- und Arbeitsrichtung (F) von außen nach innen und dann nach hinten entgegen der Fahrt- und Arbeitsrichtung (F) der Erntemaschine (1) zuführen.

5. Selbstfahrende landwirtschaftliche Erntemaschine (1) nach einem der vorhergehenden Ansprüche, **dadurch gekennzeichnet, dass** sich das als Vorsatzgerät ausgebildete Erntegerät (2) der Erntemaschine (1) in seiner Transportstellung außerhalb einer von den Augen des Fahrers der Erntemaschine (1) ausgehenden Sichtfeldebene befindet.

6. Selbstfahrende landwirtschaftliche Erntemaschine (1) nach einem der vorhergehenden Ansprüche, **dadurch gekennzeichnet, dass** die zumindest drei Teile (3, 4, 5) des Erntegerätes (2) in der Transportstellung eine horizontale Ausrichtung zueinander und zum Erdboden einnehmen, die zumindest annähernd parallel ist.

7. Selbstfahrende landwirtschaftliche Erntemaschine (1) nach einem der vorhergehenden Ansprüche, **dadurch gekennzeichnet, dass** zumindest zwei Schwenkachsen (12, 13) der verschwenkbaren Teile des Erntegerätes (2) in zueinander beabstandeten horizontalen Ebenen liegen.

8. Selbstfahrende landwirtschaftliche Erntemaschine (1) nach einem der vorhergehenden Ansprüche, **dadurch gekennzeichnet, dass** die annähernd in Fahrt- und Arbeitsrichtung (F) ausgerichteten Schwenkachsen (12, 13) der verschwenkbaren Teile (4, 5) des Erntegerätes (2) derart in einem Winkel zu einer in Fahrt- und Arbeitsrichtung verlaufenden vertikalen Mittellängsebene der Erntemaschine (1) abweichen, das die Mittellinien der in die Transportposition verschwenkten Teile in einer Ansicht von oben in Richtung Erdboden gesehen einen spitzen Winkel zur Mittellinie eines nicht verschwenkten Teiles (3) des Erntegerätes (2) bilden.

9. Selbstfahrende landwirtschaftliche Erntemaschine (1) nach einem der vorhergehenden Ansprüche, **dadurch gekennzeichnet, dass** das Erntegerät (2) der Erntemaschine (1) bei dreiteiliger Ausführung eine Arbeitsbreite aufweist, die zumindest annähernd dem dreifachen der maximal gesetzlich zulässigen Transportbreite im Straßenverkehr entspricht.

10. Selbstfahrende landwirtschaftliche Erntemaschine (1) nach einem der vorhergehenden Ansprüche, **dadurch gekennzeichnet, dass** das sie umfassende Erntegerät (2) ein Vorsatzgerät zur reihenunabhängigen Ernte von Mais ist.

## Claims

1. Self-propelled agricultural harvester (1) comprising a harvesting device (2) which is arranged in the front region in a travelling and/or working direction in front of a driver's cab, formed of at least a middle part (3) and side parts (4, 5), oriented transversely to the travelling and working direction (F) in its longest direction, and is designed such that said side parts (4, 5) can be transferred from an operating position, which extends transversely to the travelling and working direction (F), into a transport position by pivoting at least two side parts (4, 5) of the harvesting device (2) approximately 180° about pivot axes (12, 13) which are located at least approximately in the travelling and working direction (F) such that the legally permissible dimensions, in particular in terms of transport width, to allow the harvester (1) to travel on roads are observed and, by following a sequence during pivoting, the at least two pivotable side parts (4, 5), the longitudinal extension of which, oriented transversely to the travelling and working direction (F), corresponds in each case at least approximately to the maximum permissible transport width, are placed one on top of the other on the middle part (3) following pivoting with their undersides facing upwards in each case, wherein at least one mowing and/or conveying means (7, 8) is associated with each part (3, 4, 5) of the harvesting device (2) and said mowing and/or conveying means, as continuous conveyors, feed the crops to a feed region (11) of the harvester (1), wherein, during the working movement of the harvester, the mowing and conveying means (8) of the side parts (4, 5) cause the entire crop that can be gripped to be cut, held and conveyed further on the front side, pointing in the direction of travel (F), towards the middle part (3).

2. Self-propelled agricultural harvester (1) according to claim 1, **characterised in that** the harvesting device (2) is divided into three, one part (3) comprising a base frame (6) which, in its transverse direction, is arranged centrally relative to a vertical centre plane of the harvester (1) and with which the other parts are associated such as to be pivotally articulated to the edge thereof as side parts (4, 5).

3. Self-propelled agricultural harvester (1) according to either claim 1 or claim 2, **characterised in that** additional operating positions, having different working widths, of the harvester (2) are made possible by pivoting at least one pivotable part (4, 5) of the harvesting device (2) into a non-operational position oriented approximately perpendicularly to the ground.

4. Self-propelled agricultural harvester (1) according to any of the preceding claims, **characterised in that** the middle part (3), comprising the base frame (6), of the harvesting device (2) has at least two mowing and/or conveying means (7) which firstly feed the crops from the outside inwards transversely to the travelling and working direction (F) and then towards the rear in the opposite direction to the travelling and working direction (F) of the harvester (1).

5. Self-propelled agricultural harvester (1) according to any of the preceding claims, **characterised in that**, in its transport position, the harvesting device (2), formed as an attachment, of the harvester (1) is outside a visual plane proceeding from the eyes of the driver of the harvester (1).

6. Self-propelled agricultural harvester (1) according to any of the preceding claims, **characterised in that**, in the transport position, the at least three parts (3, 4, 5) of the harvesting device (2) assume a horizontal orientation relative to one another and to the ground which is at least approximately parallel.

7. Self-propelled agricultural harvester (1) according to any of the preceding claims, **characterised in that** at least two pivot axes (12, 13) of the pivotable parts of the harvesting device (2) are located in horizontal planes which are at a distance from one another.

8. Self-propelled agricultural harvester (1) according to any of the preceding claims, **characterised in that** the pivot axes (12, 13), which are oriented approximately in the travelling and working direction (F), of the pivotable parts (4, 5) of the harvesting device (2) are at different angles to a vertical central longitudinal plane, which extends in the travelling and working direction, of the harvester (1) such that, when viewed from above towards the ground, the central lines of the parts that have been pivoted into the transport position form an acute angle to the centre line of a non-pivoted part (3) of the harvesting device (2).

9. Self-propelled agricultural harvester (1) according to any of the preceding claims, **characterised in that**, when designed in three parts, the harvesting device (2) of the harvester (1) has a working width which at least approximately corresponds to three times the maximum legally permissible transport width for road transport.

10. Self-propelled agricultural harvester (1) according to any of the preceding claims, **characterised in that** the harvesting device (2) comprising said harvester is an attachment for harvesting corn in a row-independent manner.

## Revendications

1. Moissonneuse agricole automotrice (1) comportant un appareil de récolte (2) positionné dans la zone frontale dans la direction de déplacement et/ou de travail en avant d'un poste de conduite, formé au moins d'une partie médiane (3) et de parties latérales (4, 5) et orienté dans sa plus grande longueur transversalement à la direction de déplacement et de travail (F) qui est réalisé de sorte que suite à un pivotement d'approximativement 180° des parties latérales au moins au nombre de deux (4, 5) de l'appareil de récolte (2) autour d'axes de pivotement (12, 13) situés au moins approximativement dans la direction de déplacement et de travail (F), ces parties latérales (4, 5) peuvent être transférées d'une position de fonctionnement s'étendant transversalement à la direction de déplacement et de travail (F) dans une position de transport de sorte que les dimensions légalement autorisées pour le déplacement sur route de la moissonneuse (1) en particulier concernant la largeur de transport puisse être respectées, et, que les parties latérales pivotantes (4, 5) au moins au nombre de deux dont l'extension longitudinale dirigée transversalement à la direction de déplacement et de travail (F) correspond respectivement au moins approximativement à la largeur de transport maximum autorisée, soient déposées l'une sur l'autre sur la partie médiane (3) avec leur face inférieure respectivement orientée vers le haut respectant une succession d'étapes, lors du repliement après le pivotement, à chaque partie (3, 4, 5) de l'appareil de récolte (2) étant associé au moins un moyen de coupe et/ou de transport (7, 8) et ce moyen réalisé sous la forme d'un convoyeur sans fin transférant le produit de la récolte à une zone d'alimentation (11) de la moissonneuse (1), le moyen de coupe et de transport (8) des parties latérales (4, 5) effectuant, pendant le déplacement de travail de la moissonneuse une découpe, un ramassage et un transport ultérieur de la totalité du produit de la récolte pouvant être saisi sur la face avant s'étendant dans la direction de transport (F) vers la partie médiane (3).

2. Moissonneuse agricole automotrice (1) conforme à la revendication 1,
**caractérisée en ce que**
l'appareil de récolte (2) est subdivisé en trois parties, l'une des ces parties (3) comprenant un châssis de base (6) situé dans son orientation transversale au milieu du plan vertical médian de la moissonneuse (1), auquel sont associées les autres parties articulées de manière à pouvoir pivoter sur leurs bords constituant les parties latérales (4, 5).

3. Moissonneuse agricole automotrice (1) conforme à l'une des revendications 1 à 2,
**caractérisée en ce que**
le pivotement d'au moins une partie pivotante (4, 5) de la moissonneuse (2) dans une position de travail externe orientée essentiellement perpendiculairement au sol, permet d'obtenir d'autres positions de fonctionnement de la moissonneuse (2) avec différentes largeurs de travail.

4. Moissonneuse agricole automotrice (1) conforme à l'une des revendications précédentes,
**caractérisée en ce que**
la partie médiane (3) de la moissonneuse (2) comportant le châssis de base (6) comporte au moins deux moyens de coupe et/ou de transport (7) qui transfèrent le produit de la récolte tout d'abord transversalement à la direction de déplacement et de travail (F) de l'extérieur vers l'intérieur et ensuite vers l'arrière en direction opposée à la direction de déplacement et de travail (F) de la moissonneuse (1).

5. Moissonneuse agricole automotrice (1) conforme à l'une des revendications précédentes,
**caractérisée en ce que**
l'appareil de récolte (2) de la moissonneuse (1) réalisé sous la forme d'un outil adaptable est situé dans sa direction de transport à l'extérieur d'un plan de champ de vision partant des yeux du conducteur de la moissonneuse (1).

6. Moissonneuse agricole automotrice (1) conforme à l'une des revendications précédentes,
**caractérisée en ce que**
les parties (3, 4, 5) au moins au nombre de trois de la moissonneuses (2) prennent dans la direction de transport une orientation horizontale les unes par rapport aux autres et par rapport au sol et sont au moins approximativement parallèles

7. Moissonneuse agricole automotrice (1) conforme à l'une des revendications précédentes,
**caractérisée en ce qu'**
au moins deux axes de pivotement (12, 13) des parties pivotantes de l'appareil de récolte (2) sont situés dans des plans horizontaux situés à distance l'un de l'autre.

8. Moissonneuse agricole automotrice (1) conforme à l'une des revendications précédentes,
**caractérisée en ce que**
les axes de pivotement (12, 13) des parties pivotantes (4, 5) de l'appareil de récolte (2) approximativement orientés dans la direction de déplacement et de travail (F) s'écartent angulairement par rapport au plan longitudinal médian vertical de la moissonneuse (1) s'étendant dans la direction de déplacement et de travail de sorte que les axes médians des parties pivotées dans la position de transport forment en vue de dessus en direction du sol un angle aigu par rapport à l'axe médian de la partie non pivotante (3) de l'appareil de récolte (2).

9. Moissonneuse agricole automotrice (1) conforme à l'une des revendications précédentes,
**caractérisée en ce que**
l'appareil de récolte (2) de la moissonneuse (1) comporte, dans le cas d'une réalisation en trois parties, une largeur de travail qui correspond au moins approximativement à trois fois la largeur de transport légalement autorisée maximum dans le trafic routier.

10. Moissonneuse agricole automotrice (1) conforme à l'une des revendications précédentes,
**caractérisée en ce que**
l'appareil de récolte (2) dont elle est équipée est un outil adaptable pour la récolte du maïs indépendamment de rangées.
